# EUROPÄISCHE PATENTANMELDUNG

(11) **EP 2 336 616 A1**
(43) Veröffentlichungstag der Anmeldung: **22.06.2011**
(21) Anmeldenummer: 10401212.5
(22) Anmeldetag: 03.12.2010
(51) Int. Cl.: F16K 11/085

(54) **Mehrwegehahn**

(30) Priorität: 15.12.2009 DE 102009044899
(71) Anmelder: Amazonen-Werke H. Dreyer GmbH & Co. KG, 49205 Hasbergen (DE)
(72) Erfinder: Oberheide, Friedrich, 49143, Bissendorf (DE); Langkamp, Laurenz, 49545, Tecklenburg (DE); Kalverkamp, Felix, 49401, Damme (DE)

(57) **Zusammenfassung**

Mehrwegehahn, insbesondere eines ein Gehäuse (3) mit einem Verteilerraum (4) aufweisenden Mehrfachdüsenkörpers (2) mit mehreren Ausbringdüsen zur Anordnung an der Flüssigkeitsleitung einer landwirtschaftlichen Feldspritze, wobei an dem Verteilerraum eine Zulaufleitung (6) und mehrere Abgangsleitungen (7,8) angeschlossen sind, wobei die Zugangsleitung und/oder die Abgangsleitungen mittels zumindest eines in den Verteilerraum angeordneten Ventilelementes (5) wahlweise absperrbar oder freigebbar sind, wobei das Ventilelement an einer drehbar in dem Gehäuse gelagerten Schaltwelle (10) angeordnet ist. Um einen Mehrwegehahn, insbesondere für einen Mehrfachdüsenkörper zu schaffen, bei dem die Schaltwelle mit geringen Kräften zur Durchführung der Schaltvorgänge verdrehbar ist, ist vorgesehen, dass das Ventilelement (5) exzentrisch zur Drehachse (12) der Schaltwelle (10) angeordnet ist.

## Beschreibung

Die Erfindung betrifft einen Mehrwegehahn, insbesondere eines ein Gehäuse mit einem Verteilerraum aufweisenden Mehrfachdüsenkörpers gemäß des Oberbegriffes des Patentanspruches 1.

Ein derartiger Mehrwegehahn ist beispielsweise durch das DE 78 12 539 U1 bekannt. Dieser Mehrwegehahn ist einem Mehrfachdüsenkörper zugeordnet. Wahlweise ist mittels des Ventilelementes des Mehrwegehahnes die Zuleitung mit verschiedenen Abgangsleitungen, die zu Ausbringdüsen des Mehrfachdüsenkörpers führen, abzusperren oder zu verbinden.

Dieser Mehrwegehahn weist ein als Drehschieber ausgebildetes Ventilelement auf, das um eine Achse in verschiedenen Positionen verdreht werden kann. Die Reibung zwischen den Dichtelementen des als Drehschieber ausgebildeten Ventilelementes und den Wandungen des Verteilerraumes ist relativ hoch, so dass der Drehschieber mittels der Schaltwelle nur mit relativ großen Kräften verdreht werden kann. Dies ist insbesondere bei der Betätigung durch motorische Stellmittel, insbesondere kleine Elektromotore von Nachteil.

Der Erfindung liegt die Aufgabe zugrunde, einen Mehrwegehahn, insbesondere für einen Mehrfachdüsenkörper zu schaffen, bei dem die Schaltwelle mit geringen Kräften zur Durchführung der Schaltvorgänge verdrehbar ist.

Diese Aufgabe wird erfindungemäß dadurch gelöst, dass das Ventilelement exzentrisch zur Drehachse der Schaltwelle angeordnet ist. Infolge dieser Maßnahme wird die Grundvoraussetzung geschaffen, dass die Reibungskräfte zwischen dem verdrehbaren Ventilelement und den Wandungen des Verteilerraumes erheblich reduziert werden, weil das Ventilelement aufgrund seiner exzentrischen Anordnung zur Drehachse der Schaltwelle nur über einen geringen Bereich mit den Wandungen des Verteilerraumes in Berührung kommt.

Ein besonders leichtes Verdrehen des Ventilelementes über die Schaltwelle mit sehr geringen Reibungskräften lässt sich dadurch erreichen, dass an der Schaltwelle im Verteilerraum eine zur Drehachse versetzt angeordnete Exzenterwelle angeordnet ist, dass auf der Exzenterwelle eine zylinderförmige Abdichtrolle frei drehbar angeordnet ist. In einfacher Weise lässt sich durch die drehbar angeordnete Abdichtrolle die jeweilige Einmündung der Zulaufleitung oder die Abgangsöffnung der Absperrleitungen verschließen und absperren. Durch das Verdrehen der Schaltwelle mittels der Abdichtrolle ist so wahlweise die Einmündung der Zulaufleitung oder eine der Abgangsöffnungen der Absperrleitungen verschließbar und/oder absperrbar.

Eine einfache Ausgestaltung der Schaltwelle lässt sich dadurch erreichen, dass die Schaltwelle zur Schaffung einer Exzenterwelle kurbelwellenartig ausgebildet ist.

Eine vorteilhafte Abdichtung durch das Ventilelement wird dadurch erreicht, dass dem Einmündungsbereich der Zulaufleitung und den Abgangsbereichen der Abgangsöffnungen jeweils auf der dem Verteilerraum zugewandten Seite eine mit dem Zylindermantel der Abdichtrolle abdichtend zusammenwirkende und als Zylinderabschnitt ausgebildete Dichtfläche zugeordnet sind.

Diese Abdichtung in definierte Schaltstellungen lässt sich dadurch erreichen, dass der Radius der die Dichtflächen bildenden Zylinderabschnitte kleiner als der Abstand zwischen der Drehachse der Schaltwelle und den von den Zylinderabschnitten gebildeten Dichtflächen die im zumindest annähernd gleichen Abstand zur Drehachse der Schaltwelle jeweils angeordnet sind, ist.

Eine besonders gute Abdichtung durch das Ventilelement lässt sich dadurch erreichen, dass die Abdichtrolle zumindest in ihrem äußeren, den Abdichtbereich bildenden Bereich und/oder die den Einmündungsbereich und den Abgangsbereich zu geordneten Dichtflächen aus einem flexiblen Material bestehen.

Ein leichtes Verdrehen des Abdichtelementes auf der Exzenterwelle der Schaltwelle lässt sich dadurch erreichen, dass auf der Exzenterwelle ein Lagerkörper drehbar angeordnet ist, dass auf dem Lagerkörper ein zylinderförmiges Abdichtelement angeordnet ist.

### Weitere Einzelheiten der Erfindung sind der

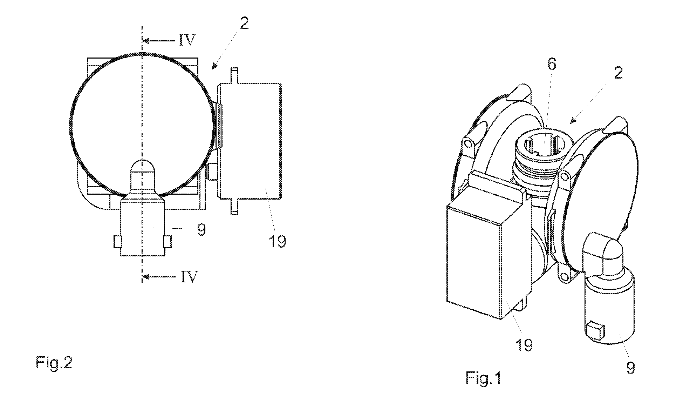

Beispielsbeschreibung und den Zeichnungen zu entnehmen. Hierbei zeigen
- Fig. 1: einen Mehrwegehahn aufweisenden Mehrfachdüsenkörper in perspektivischer Darstellung,
- Fig. 2: den Mehrfachdüsenkörper in Seitenansicht,
- Fig. 3: den Mehrfachdüsenkörper im Schnitt III - III in vergrößertem Maßstab,
- Fig. 4: den Mehrfachdüsenkörper mit einer ersten Schaltstellung des Ventilelementes des Mehrwegehahnes im Schnitt III - III,
- Fig. 5: den Mehrfachdüsenkörper mit einer weiteren Schaltstellung des Ventilelementes des Mehrwegehahnes im Schnitt III - III,
- Fig. 6: den Mehrfachdüsenkörper mit einer weiteren Schaltstellung des Ventilelementes des Mehrwegehahnes im Schnitt III - III und
- Fig. 7: den Mehrfachdüsenkörper mit einer weiteren Schaltstellung des Ventilelementes des Mehrwegehahnes im Schnitt III - III.

Der Mehrwegehahn 1 ist in den Mehrfachdüsenkörper 2 integriert. Der Mehrfachdüsenkörper 2 weist ein Gehäuse 3 mit einem Verteilerraum 4 auf, in dem das Ventilelement 5 des Mehrwegehahnes 1 angeordnet ist. Der Mehrfachdüsenkörper 2 ist zur Anbringung an einer Flüssigkeitsleitung einer landwirtschaftlichen Feldspritze in bekannter Weise vorgesehen. An dem Mehrfachdüsenkörper 2 können mehrere nicht dargestellte Ausbringdüsen angeordnet werden. Das Gehäuse 3 des Mehrfachdüsenkörpers 2 weist eine Zulaufleitung 6, die mit der Flüssigkeitsleitung der Feldspritze verbunden ist und zwei Abgangsleitungen 7, 8, die jeweils zu nicht dargestellten Ausbringdüsen führen, auf. An den Anschlussstellen 9 der Abgangsleitungen 7, 8 sind mittels bekannter Kupplungseinrichtungen nicht dargestellte Ausbringdüsen anzuordnen.

In dem Verteilerraum 4 des Gehäuses 3 ist das Ventilelement 5 des Mehrwegehahnes 1 angeordnet. Der Mehrwegehahn 1 weist eine drehbar in dem Gehäuse 3 gelagerte Schaltwelle 10 auf. Diese Schaltwelle 10 ist zur Schaffung einer Exzenterwelle 11 kurbelwellenartig ausgebildet. An der Schaltwelle 10 ist im Verteilerraum 4 die zur Drehachse 12 der Schaltwelle 10 versetzt angeordnete Exzenterwelle 11 angeordnet. Auf der Exzenterwelle 11 ist eine zylinderförmige Abdichtrolle 13, die das Ventilelement 5 bildet, frei drehbar angeordnet. Diese Abdichtrolle 13 weist einen Lagerkörper 14 auf, welcher frei drehbar auf der Exzenterwelle 11 angeordnet ist. Auf dem Lagerkörper 10 ist das zylinderförmige Abdichtelement 15 als zylinderförmiges Element angeordnet. Im Ausführungsbeispiel ist dieses Element aus einem flexiblen hergestellt und bildet die Dichtfläche.

Dem Einmündungsbereich der Zulaufleitung 6 und den Abgangsbereichen der Abgangsleitungen 7,8 ist jeweils eine mit dem Zylindermantel der Abdichtrolle 13 abdichtend zusammenwirkende und als Zylinderabschnitt ausgebildete Dichtfläche 16, 17, 18 zugeordnet. Hierbei ist der Radius, der die Dichtflächen 16, 17, 18 bildenden Zylinderabschnitte kleiner als der Abstand zwischen der Drehachse 12 und der Schaltwelle 10 und den von den Zylinderabschnitten gebildeten Dichtfläche 16, 17, 18, die in jeweils zumindest annähernd gleichen Abständen zur Drehachse 12 der Schaltwelle 10 angeordnet sind.

Auf der Exzenterwelle 11 ist der Lagerkörper 14 frei drehbar angeordnet. Auf dem Lagerkörper 14 ist das zylinderförmige Abdichtelement 15 angeordnet. Der Lagerkörper 15 und das zylinderförmige Abdichtelement 15 bilden die Abdichtrolle 13.

Außerhalb des Gehäuses 3 greift an der Schaltwelle 10 das als Elektromotor 19 ausgebildetes elektrisches Stellmittel an. Mittels dieses Elektromotors 19 ist die Schaltwelle zu verdrehen, so dass der Zylindermantel der Abdichtrolle 13 wahlweise den Einmündungsbereich 16 der Zulaufleitung 6 oder die Abgangsbereiche 17, 18 der Abgangsleitungen 7, 8, die zu den Ausbringdüsen führen, absperren kann.

Es sei nicht unerwähnt gelassen, dass die den Einmündungsbereich oder den Abgangsbereich zugeordneten Dichtflächen 16, 17, 18 ebenfalls aus einem flexiblen Material bestehen können.

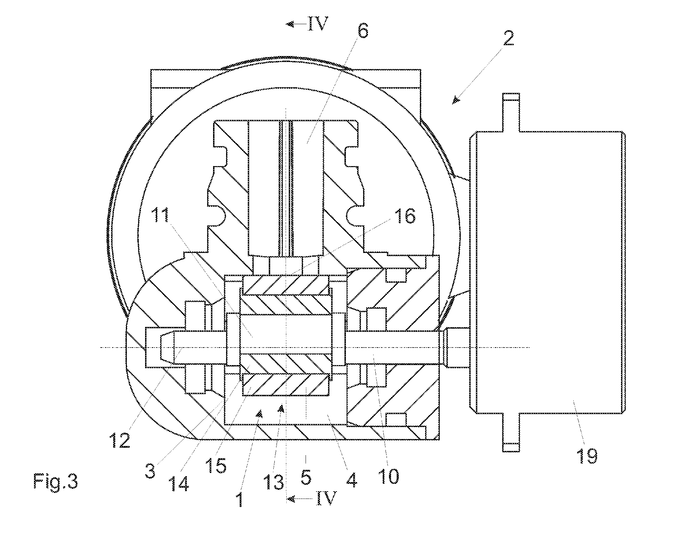

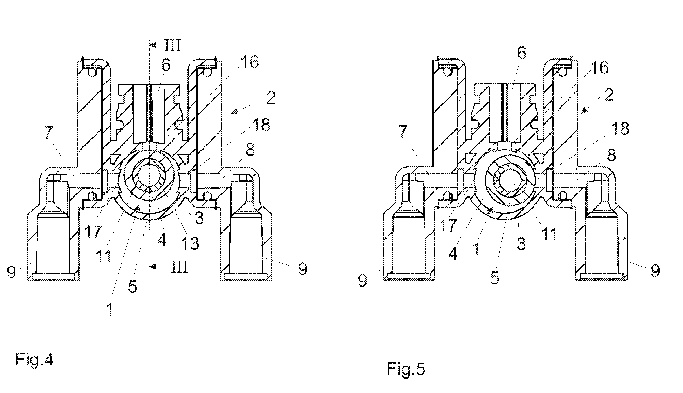

In den Fig. 3 und 4 ist die Schaltposition der Schaltwelle 10 so dargestellt, dass die Abdichtrolle 13 den Einmündungsbereich 16 der Zulaufleitung abdichtet, so dass die Zulaufleitung 6 zu dem Verteilerraum 4 des Gehäuses 3 des Mehrfachdüsenkörpers 2 abgesperrt ist. In diesem Falle wird keiner der Abgangsleitungen 7, 8 auszubringende Flüssigkeit zugeleitet.

In der Fig. 5 ist eine Position der Schaltwelle 10 dargestellt, in welcher die Abdichtrolle 13 den in der Zeichnung dargestellten rechten Abgangsbereich 18 der rechten Abgangsleitung 8 absperrt. In diesem Falle wird über die Zugangsleitung 6 der linken Abgangsleitung 7 und der dieser Abgangsleitung 7 zugeordneten Ausbringdüse Flüssigkeit zugeleitet.

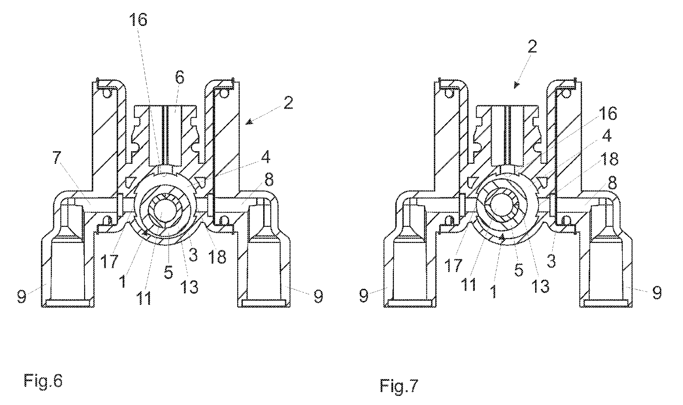

In der Schaltstellung der Schaltwelle 10 gemäß Fig. 6 ist sowohl der Einmündungsbereich 16, wie die beiden Abgangsbereiche 17, 18 der beiden Abgangsleitungen 7, 8 freigegeben, so dass über die Zulaufleitung 6 den beiden Abgangsleitungen 7, 8 und somit beiden Ausbringdüsen des Mehrfachdüsenkörpers 2 Flüssigkeit zugeleitet wird.

In der Schaltstellung der Schaltwelle 10 gemäß Fig. 7 wird der Abgangsbereich 17 der linken Abgangsleitung 7 abgesperrt, so dass über die Zulaufleitung 6 nur der rechten Abgangsleitung 8 und zugeordneter Aufbringdüse Flüssigkeit zugeleitet wird.

## Patentansprüche

1. Mehrwegehahn, insbesondere eines ein Gehäuse mit einem Verteilerraum aufweisenden Mehrfachdüsenkörpers mit mehreren Ausbringdüsen zur Anordnung an der Flüssigkeitsleitung einer landwirtschaftlichen Feldspritze, wobei an dem Verteilerraum eine Zulaufleitung und mehrere Abgangsleitungen angeschlossen sind, wobei die Zugangsleitung und/oder die Abgangsleitungen mittels zumindest eines in den Verteilerraum angeordneten Ventilelementes wahlweise absperrbar oder freigebbar sind, wobei das Ventilelement an einer drehbar in dem Gehäuse gelagerten Schaltwelle angeordnet ist, **dadurch gekennzeichnet, dass** das Ventilelement (5) exzentrisch zur Drehachse (12) der Schaltwelle (10) angeordnet ist.

2. Mehrwegehahn nach Anspruch 1, **dadurch gekennzeichnet, dass** an der Schaltwelle (10) im Verteilerraum (4) eine zur Drehachse (12) versetzt angeordnete Exzenterwelle (10) angeordnet ist, dass auf der Exzenterwelle (10) eine zylinderförmige Abdichtrolle (13) frei drehbar angeordnet ist.

3. Mehrwegehahn nach zumindest einem der vorstehenden Ansprüche, **dadurch gekennzeichnet, dass** durch Verdrehen der Schaltwelle (10) mittels der Abdichtrolle (13) wahlweise die Einmündung (16) der Zulaufleitung (6) oder eine der Abgangsöffnungen (17) der Abgangsleitungen (7, 8 ) verschließbar und/oder absperrbar ist.

4. Mehrwegehahn nach zumindest einem der vorstehenden Ansprüche, **dadurch gekennzeichnet, dass** die Schaltwelle (19) zur Schaffung einer Exzenterwelle (11) kurbelwellenartig ausgebildet ist.

5. Mehrwegehahn nach zumindest einem der vorstehenden Ansprüche, **dadurch gekennzeichnet, dass** dem Einmündungsbereich (16) der Zulaufleitung (6) und den Abgangsbereichen (17, 18) der Abgangsöffnungen (17, 18) der Abgangsleitungen jeweils auf der dem Verteilerraum (4) zugewandten Seite eine mit dem Zylindermantel der Abdichtrolle (13) abdichtend zusammenwirkende und als Zylinderabschnitt ausgebildete Dichtfläche (16, 17,18) zugeordnet sind.

6. Mehrwegehahn nach Anspruch 5, **dadurch gekennzeichnet, dass** der Radius der die Dichtflächen (16, 17, 18) bildenden Zylinderabschnitte kleiner als der Abstand zwischen der Drehachse (12) der Schaltwelle (10) und den von den Zylinderabschnitten gebildeten Dichtflächen (16, 17, 18) die im zumindest annähernd gleichen Abstand zur Drehachse (12) der Schaltwelle (10) jeweils angeordnet sind, ist.

7. Mehrwegehahn nach zumindest einem der vorstehenden Ansprüche, **dadurch gekennzeichnet, dass** die Abdichtrolle (13) zumindest in ihrem äußeren, den Abdichtbereich bildenden Bereich und/oder die den Einmündungsbereich und den Abgangsbereich zu geordneten Dichtflächen (16, 17, 18) aus einem flexiblen Material bestehen.

8. Mehrwegehahn nach zumindest einem der vorstehenden Ansprüche, **dadurch gekennzeichnet, dass** auf der Exzenterwelle (11) ein Lagerkörper (14) drehbar angeordnet ist, dass auf dem Lagerkörper (14) ein zylinderförmiges Abdichtelement (15) angeordnet ist.

9. Mehrwegehahn nach Anspruch 8, **dadurch gekennzeichnet, dass** der Lagerkörper (14) und das zylinderförmige Abdichtelement (15) die Abdichtrolle (13) bilden.

10. Mehrwegehahn nach zumindest einem der vorstehenden Ansprüche, **dadurch gekennzeichnet, dass** an der Schaltwelle (10) ein vorzugsweise motorisches Stellmittel (19) angeordnet ist.
